# EUROPEAN PATENT SPECIFICATION

(11) **EP 1 335 566 B1**
(45) Date of publication and mention of the grant of the patent: **26.03.2008**
(21) Application number: 01982052.1
(22) Date of filing: 11.07.2001
(51) Int. Cl.: H04M 1/00, G06F 1/16

(54) **MOBILE PHONE BEING SEPARATED INTO HANDSET AND HOST PHONE WHICH COULD BE USED AS A PDA AND COMMUNICATION METHOD THEREOF**
MOBILTELEFON, DAS ZUR MÖGLICHEN VERWENDUNG ALS EIN PDA IN EINEN HANDAPPARAT UND EINEN HOST-FERNSPRECHER AUFGETEILT WIRD, UND KOMMUNIKATIONSVERFAHREN DAFÜR
TELEPHONE MOBILE DONT LE COMBINE ET LE TELEPHONE HOTE SONT SEPARES SUSCEPTIBLE D'ETRE UTILISE COMME PDA ET PROCEDE DE COMMUNICATION ASSOCIE

(30) Priority: 18.11.2000 CN 00133068
(43) Date of publication of application: 13.08.2003
(73) Proprietor: Huawei Technologies Co., Ltd., Guangdong, Shenzhen 518057 (CN)
(72) Inventor: LU, Yifeng, Huawei Service Centre Building, Guangdong, Shenzhen 518057 (CN)
(74) Representative: Mounteney, Simon James
(86) International application number: PCT/CN2001/001170
(87) International publication number: WO 2002/041606

(56) References cited:
- EP-A- 0 930 768
- CN-A- 1 227 996
- CN-A- 1 231 570
- CN-A- 1 236 281
- US-A- 5 974 334
- PATENT ABSTRACTS OF JAPAN vol. 2000, no. 14, 5 March 2001 (2001-03-05) & JP 2000 312387 A (TOSHIBA CORP), 7 November 2000 (2000-11-07)

## Description

### Field of the Technology

The present invention relates generally to a mobile phone in the wireless communication field, particularly to a mobile phone separated into a handset and a host-phone with PDA function and communication method between them.

### Background of the Invention

It is a development trend that size of a wireless terminal is getting small, and functions of a wireless terminal are getting strong. For example, personal digital assistance PDA) function has been added to a wireless terminal, so a wireless terminal can record telephone numbers, recognize handwriting, transmit and receive mails etc. In the future, functions, such as accessing to a network and multimedia communication, will also be added. However, all these add-on functions have some conflict with the basic telephone function of a wireless terminal.

When adding the PDA function, it is required that a wireless terminal has a bigger display panel in order to read a file, a mail, or scan an image easily. The result is that the size of a wireless terminal will be increased, and this will be inconvenient for carrying and listening a telephone. Consequently, the add-on PDA function affects the basic telephone function.

At present, for a wireless terminal with PDA function, some with smaller display panel is inconvenient for reading, writing or connecting to a network; some with bigger display panel is inconvenient for grasping at hand to listen a telephone call. Obviously, for the present wireless terminal, if PDA function is further strengthened, the basic function, as a mobile phone, must be affected. For example, increasing display panel size will make a mobile phone being inconvenient for grasping at hand. If using a hands-free earphone, usually it does not have ringing function. It is inconvenient for grasping at hand, and has some trouble to listen a phone call.

Besides, it is desired that a mobile phone can work with telephone at home in complement. When a subscriber goes out, a mobile phone is used for communication; when the subscriber is back home, communication is automatically switched to the telephone at home to save the communication cost.

A China Patent, numbered "98106704.2" and titled "Separated Mobile Phone for Radiation Protection", discloses a technical scheme of a separated mobile phone. In this technical scheme, a mobile phone is divided (separated) into two parts: one has a translator with emitting function; another one has a handset with receiving function. Connection between the translator and the handset can be wire mode or micro-power wireless mode. This technical scheme solves the problem that emitting electromagnetic wave with a larger power leaves the human brain far enough, i.e., the radiation protection problem. However, the technical scheme does not solve the problem that adding on the PDA function in a mobile phone conflicts with using convenience of a telephone function in the mobile phone.

A reference of which publication number is JP 2000312387, discloses a personal digital assistant (PDA) to obtain a personal digital assistant suitable for both data and voice radio communication. The PDA is provided with a first radio section for mobile station and a second radio section for a wireless handset. The PDA can make voice communication between a base station and the wireless handset. However, the PDA and its wireless handset access a mobile system rather than a PSTN.

A reference, EP0930768 A, discloses a communication terminal apparatus is separated into a housing that is capable of video/voice communications and a housing that is capable of only voice communications.

### Summary of the Invention

The purpose of the invention is to provide a separated mobile phone with PDA function and a communication method thereof. The mobile phone is convenient for use and carrying in case of any networks. The mobile phone solves conflict between using telephone conveniently and adding on PDA function, which cause size of a mobile phone bigger. In addition, the mobile phone solves complementary use of a mobile phone and a telephone at home. Further, the mobile phone solves radiation protection problem.

The invention comprises a mobile phone according to claim 1 and a method according to claim 13.

The invention is implemented with a technical scheme as follow: mobile phone which comprises a host-phone (2)with PDA function and a wireless handset (1) which separates from the host-phone (2) in space, wherein the wireless handset (1) accesses a mobile communication system through the host-phone (2), characterized by the host-phone (2) or the wireless handset (1) configured to access a public switched telephone network through a host-phone of a cordless telephone (4).

The host-phone (2) comprises a wireless modem module (21), a main controller (22), a control signal interface (23), a digital audio interface (24), a low-power wireless transceiver module (25) and a PDA device (26). The wireless modem module (21), the control signal interface (23) and the PDA device (26) are connected with the main controller (22), respectively. The digital audio interface (24) is connected with the wireless modem module (25). The digital audio interface (24) and the control signal interface (23) are connected with the low-power wireless transceiver module (25), respectively.

The wireless handset (1) comprises a main controller (11), a display (12), a microphone (13), a speaker (14), a keyboard (15) and a low-power wireless transceiver module (16). The display (12), the microphone (13), the speaker (14) and the low-power wireless transceiver module (16) are connected to the main controller (11), respectively. The keyboard (15) is connected with the low-power wireless transceiver module (16). The low-power wireless transceiver module (16) in the handset (1) corresponds to the low-power wireless transceiver module (25) in the host-phone (2).

The low-power wireless transceiver module (25) in the host-phone (2) and the low-power wireless transceiver module (26) in the wireless handset (1) is a Bluetooth protocol module.

The low-power wireless transceiver module (25) in the host-phone (2) and the low-power wireless transceiver module (26) in the wireless handset (1) is a Home Radio Frequency protocol module.

The low-power wireless transceiver module (25) of the host-phone (2) is outside the host-phone (2).

The low-power wireless transceiver module (25) of the host-phone (2) is inside the host-phone (2).

Wherein working frequency between the host-phone (2) and the wireless handset (1) of the mobile phone is 2.4GHz.

The control signal interface (23) in the host-phone (2) is a RS232 interface.

The control signal interface (23) in the host-phone (2) is an USB interface.

The wireless handset (1) pages the host-phone (2) when the host-phone (2) is in a wait state.

The wireless handset (1) pages the host-phone (2) periodically.

The wireless handset (1) alarms to warn a subscriber that the host-phone (2) may be lost or stolen if there is no acknowledgement when the wireless handset (1) pages the host-phone (2).

The invention is further implemented with a communication method that the host-phone or the wireless handset accesses to a public switched telephone network through a host-phone of a cordless telephone.

Further, when the host-phone (2) is in a wait state, the wireless handset (1) paging the host-phone (2).

Wherein the step of the wireless handset (1) paging the host-phone (2) is executed periodically.

Further, if there is no acknowledgement when the wireless handset (1) pages the host-phone (2), the handset alarming to warn the subscriber that the host-phone (2) may be lost or stolen.

It can be seen from the technical scheme, mentioned above, the invention has the following advantages, which makes the invention purpose to be reached.
1) Since the host-phone includes a PDA device, the mobile phone of the invention has functions of a general PDA product, such as electronic notebook, handwriting input and electronic dictionary. It can have functions, such as accessing to internet with WAP/iMode, sending and receiving an email or a short message. It can also have functions, such as receiving broadcast message, image communication, videotext, sending and receiving facsimile, etc.
2) Since the handset includes a display, a microphone, a speaker, a keyboard and a low-power wireless transceiver module, the mobile phone of the invention has functions of a conventional mobile phone, such as dialing, conversation, ringing, displaying a call and listening rejection, etc. The handset of the mobile phone can be set as a handset of a home cordless telephone. In addition, since the handset pages the host-phone periodically, the mobile phone has the function of stolen protection.
3) Since the host-phone and the handset are separated and the handset can control the host-phone, so it is possible to add-on some more complicated functions in the host-phone without loosing convenience.
4) Since the low-power wireless transceiver modules in the host-phone and the handset use the Bluetooth protocol or the HomeRF protocol, the handset emitting power is very small, so it is effectively reduced the radiation for human brain and is good for human health.
5) Since the handset can be set as a handset of a home cordless telephone, so when a subscriber is at home, the fixed telephone is used in priority to save the communication cost.

### Brief Description of the Drawings

Figure1 shows a logical diagram of a host-phone with inside low-power wireless transceiver module.
Figure2 shows a logical diagram of a host-phone with outside low-power wireless transceiver module.
Figure3 shows a logical diagram of a handset.
Figure4 shows a principle diagram of a host-phone and handset working in the invention.

### Embodiments of the Invention

The invention will be described in more detail, hereinafter, with reference to drawings and embodiments.

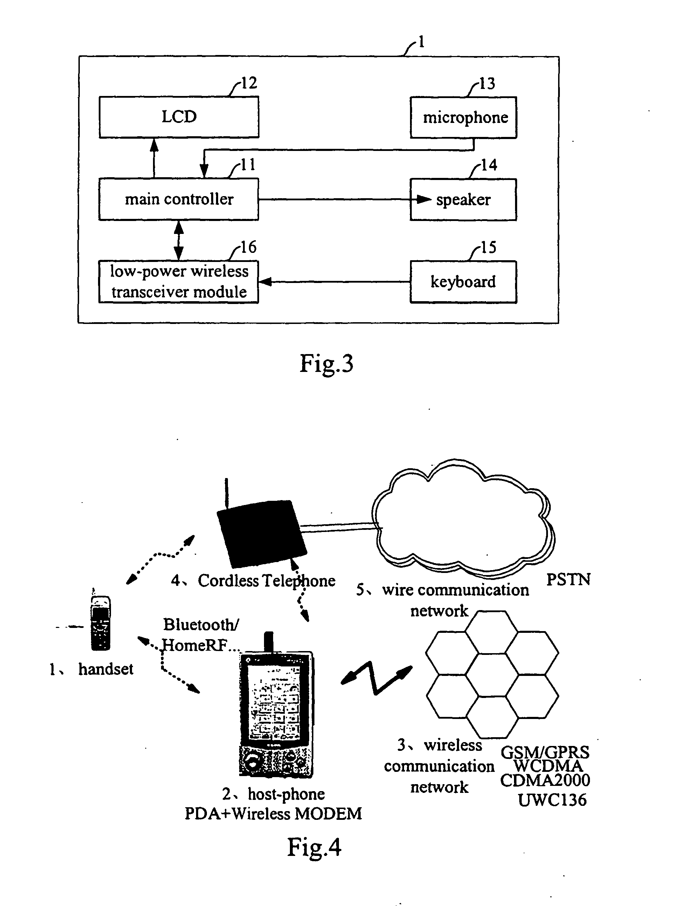

In the invention, principle of the host-phone working and the handset working is described in Fig.4. A mobile phone of the invention includes a host-phone (PDA + wireless Modem) 2 and a handset 1. The handset 1 connects with a mobile communication system (wireless communication network) 3, such as GSM/GPRS, WCDMA, CDMA 2000, TD-SCDMA and UWC136, through host-phone 2 and its air interface. When the handset 1 is set as a handset of a home cordless telephone 4, the handset 1 connects with a wire communication network 5 (public switched telephone network (PSTN)) through the host-phone of the cordless telephone 4. At the same time, the host-phone 2 also can access to PSTN through the cordless telephone 4. The handset 1 can implement dialing a phone call and listening a phone call through the wireless communication such as Bluetooth or HomeRF between the handset 1 and the host-phone 2. The handset size can be smaller for carrying and listening easily. The host-phone size can be larger for setting a larger display panel. Since distance between the host-phone 2 and the handset 1 is shorter, emission power can be very small.

Specifically, the mobile phone of the invention is implemented with the following scheme.

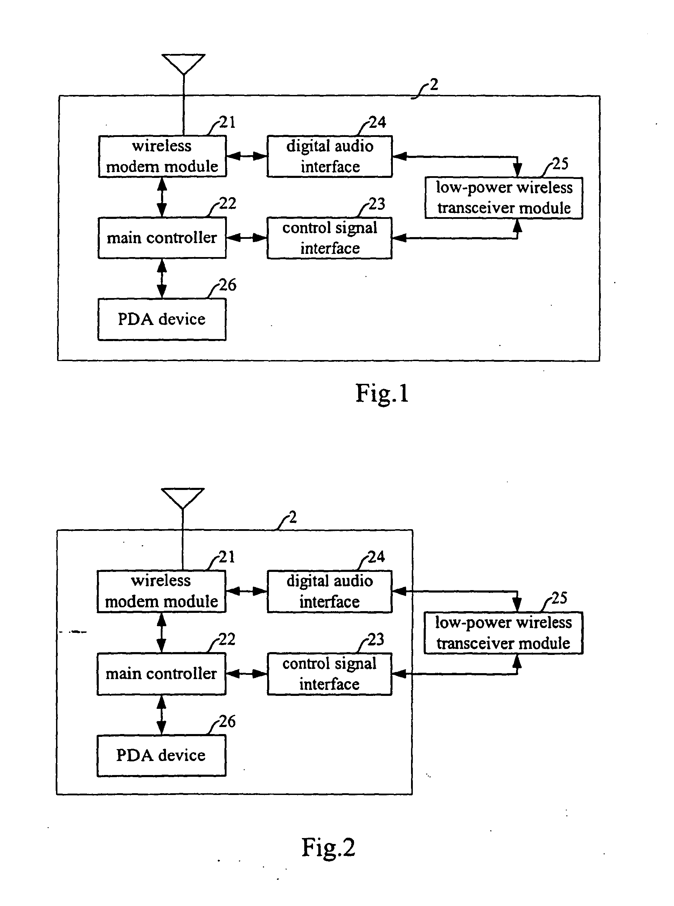

Reference to Figures 1, 2 and 3, a mobile phone of the invention is consisted of a separated host-phone 2 (as shown in Fig.1 and Fig.2) and a separated handset 1 (as shown in Fig. 3).

The host-phone 2 comprises a wireless modem module 21, a main controller 22, a control signal interface 23, a digital audio interface 24, a low-power wireless transceiver module 25 and a PDA device 26. The wireless modem module 21, the control signal interface 23 and the PDA device 26 are connected with the main controller 22, respectively. The digital audio interface 24 is connected with the wireless modem module 21. The digital audio interface 24 and the control signal interface 23 are connected with the low-power wireless transceiver module 25, respectively. The wireless modem module 21 is connected with an antenna. The low-power wireless transceiver module 25 of the host-phone 2 in Fig. 1 is inside and the low-power wireless transceiver module 25 of the host-phone 2 in Fig. 2 is outside.

The handset 1 comprises a main controller 11, a liquid crystal display (LCD) 12, a microphone 13, a speaker 14, a keyboard 15 and a low-power wireless transceiver module 16. The low-power wireless transceiver module 16 corresponds to the low-power wireless transceiver module 25 in the host-phone 2. The LCD 12, the microphone 13, the speaker 14 and the low-power wireless transceiver module 16 are connected to the main controller 11, respectively. The keyboard 15 is connected with the low-power wireless transceiver module 16.

When the mobile phone is sending an audio signal, the audio signal coming from the microphone 13 of handset 1 and having been processed by the main controller 11, is sent to the low-power wireless transceiver module 16 for transmitting. After the transmitted signal has been received by the low-power wireless transceiver module 25 in the host-phone 2, it is transferred to the wireless modem module 21 through the digital audio interface 24. After having been processed and modulated in the wireless modem module 21, the signal is emitted in the air by the antenna.

When the mobile phone is receiving a signal, the signal coming from the air, is demodulated by the wireless modem module 21 and recovered to an audio signal, which is then transferred to the low-power wireless transceiver 25 through the digital audio interface 24. The audio signal is modulated by the low-power wireless transceiver 25 and transmitted to the handset 1 in a short distance. In the handset 1, the modulated audio signal is demodulated to an audio signal by the low-power wireless transceiver module 16. The audio signal is sent to the speaker 14 for output, under control of the main controller.

When the mobile phone is sending a control command, the control command sent out by the keyboard 15 in the handset 1, is first modulated by the low-power wireless transceiver module 16, and then transmitted to the low-power wireless transceiver module 25 in the host-phone 2. In the host-phone 2, the control command is solved by the control signal interface 23 and the main controller 22, then it is modulated and emitted to the air by the wireless modem module 21.

When the mobile phone is receiving a control command, the control command coming from the air, is modulated and transmitted to the handset 1 by the low-power wireless transceiver module 25 in the host-phone, after having been passed through the wireless modem module 21, the main controller 22 and the control signal interface 23. In the handset 1, the low-power wireless transceiver module 16 receives the control command, and the LCD displays the control command after having been processed by the main controller 11.

The low-power wireless transceiver modules 25 and 16 can use Bluetooth protocol or home radio frequency (HomeRF) protocol. The working frequency between the host-phone 2 and the handset 1 is 2.4GHz. Of course, other frequency can also be used.

The low-power wireless transceiver module 25 of host-phone 2 can be set inside or outside, as shown in Fig.1 and Fig.2, respectively.

The control signal interface 23 in host-phone 2 can be a RS232 interface or a USB interface.

Bluetooth protocol is a protocol that provides short distance wireless communication. Purpose of the protocol is to replace cable connection between electronic equipment with a wireless mode. The protocol can work at ISM frequency band (Industrial, Scientific and Medical Frequency Band) without application. When the protocol works at FDD (Frequency Division Duplex) mode, the maximum emission power can reach 100mw and symbol rate is 1Mb/s. The protocol provides "point to point" or "point to multipoint" connection, and works at hopping frequency mode and has about 10 meters communication distance.

HomeRF mode is a short distance communication mode based on wireless LAN technology and DECT (Digital European Cordless Telecommunication) technology. Purpose of the mode is to establish a wireless local area network at home. The mode also can work at ISM frequency band without application. Frame structure of the mode is a mixture of TDMA (Time Division Multiple Access) mode and CSMA (Carrier Sense Multiple Access) mode, which is a combination of DECT frame structure and wireless LAN frame structure. The mode takes into account requirement of voice communication and high-speed data communication, and can support six full-duplex voice communications or a 2Mb/s data communication. The HomeRF mode also uses hopping frequency mode, and has an emission power of 100mw and 50 meters communication distance. HomeRF will have a bright application future for household appliances communication.

In the invention mobile phone, the low-power wireless transceiver modules in host-phone and handset use Bluetooth protocol or HomeRF protocol so that the purpose of the invention can be achieved.

In the invention, the mobile phone has the following embodiments:
1) The handset is a supplementary part of the host-phone, and the interface unit (the low-power wireless transceiver module) between the host-phone and the handset is integrated inside the host-phone;
2) The interface unit (the low-power wireless transceiver module) between the host-phone and the handset is independent from the host-phone in space, the low-power wireless transceiver module is connected with the main controller of the host-phone by RS232 or USB interface (the control signal interface), and the control command uses AT command set. The microphone of the mobile phone input an audio signal, and the speaker output an audio signal.

During using the mobile phone, a subscriber can keep the host-phone in a carrying dispatch-case or pocket, and takes the handset at hand. When a subscriber wants to call out, a callee telephone number is directly dialed at the handset, and the handset controls the host-phone to hook off and send out the telephone number. When it has been connected, the subscriber uses directly the handset to make conversation with the callee. When there is a call in, the handset rings and displays the caller telephone number, and the subscriber uses the handset to listen the call directly.

When there is an image or a document to be transferred, a subscriber uses the PDA function at the host-phone, and a call can be switched to the host-phone. When the host-phone is in a wait state, the handset can page the host-phone periodically. If there is no acknowledgement, the handset will alarm to warn the subscriber that the host-phone may be lost or stolen.

When a subscriber is at home, the host-phone or handset can be connected to the home cordless telephone, automatically or manually. When the subscriber wants to use a telephone or access to a network, using the cordless telephone to access to PSTN is priority.

## Claims

1. A mobile phone which comprises a host-phone (2)with PDA function and a wireless handset (1) which is operable to separate from the host-phone (2) in space, wherein the wireless handset (1) is arranged to access a mobile communication system through the host-phone (2), **characterized by** the host-phone (2) or the wireless handset (1) being configured to access a public switched telephone network through a host-phone of a cordless telephone (4).

2. A mobile phone according to claim 1, wherein:
the host-phone (2) includes a wireless modem module (21), a main controller (22), a control signal interface (23), a digital audio interface (24), a low-power wireless transceiver module (25) and a PDA device (26) ; the wireless modem module (21), the control signal interface (23) and the PDA device (26)is connected with the main controller (22), respectively; the digital audio interface (24)is connected with the wireless modem module (21); the digital audio interface (24) and the control signal interface (23) is connected with the low-power wireless transceiver module, respectively;
the wireless handset (1) includes a main controller (11), a display (12), a microphone (13), a speaker (14), a keyboard (15) and a low-power wireless transceiver module (16); the display (12), the microphone (13), speaker (14) and the low-power wireless transceiver module (16)is connected to the main controller (11), respectively; the keyboard (15) is connected with the low-power wireless transceiver module (16);
the low-power wireless transceiver module (16) in the handset (1) corresponds to the low-power wireless transceiver module (25) in the host-phone (2).

3. A mobile phone according to Claim 2, wherein the low-power wireless transceiver module (25) in the host-phone (2) and the low-power wireless transceiver module (26) in the wireless handset (1) is a Bluetooth protocol module.

4. A mobile phone according to Claim 2, wherein the low-power wireless transceiver module (25) in the host-phone (2) and the low-power wireless transceiver module (26) in the wireless handset (1) is a Home Radio Frequency protocol module.

5. A mobile phone according to Claim 2, wherein the low-power wireless transceiver module (25) of the host-phone (2) is outside the host-phone (2).

6. A mobile phone according to Claim 2, wherein the low-power wireless transceiver module (25) of the host-phone (2) is inside the host-phone (2).

7. A mobile phone according to Claim 2, wherein working frequency between the host-phone (2) and the wireless handset (1) of the mobile phone is 2.4GHz.

8. A mobile phone according to Claim 2, wherein the control signal interface (23) in the host-phone (2) is a RS232 interface.

9. A mobile phone according to Claim 2, wherein the control signal interface (23) in the host-phone (2) is an USB interface.

10. A mobile phone according to Claim 1, wherein the wireless handset (1) is adapted to the host-phone (2) when the host-phone (2) is in a wait state.

11. A mobile phone according to Claim 1, wherein the wireless handset (1) is adapted to the host-phone (2) periodically.

12. A mobile phone according to Claim 10 or 11, wherein the wireless handset (1) is arranged to perform an alarm to warn a subscriber that the host-phone (2) may be lost or stolen if there is no acknowledgement when the wireless handset is adapted to page the host-phone (2).

13. A communication method of a mobile phone which comprises a host-phone (2) with PDA function and a wireless handset (1) which is operable to separate from the host-phone (2) in space, wherein the wireless handset (1) is arranged to connect with a mobile communication system through the host-phone (2), **characterized in that**, the host-phone (2) or the wireless handset (1) is arranged to access to a public switched telephone network through a host-phone of a cordless telephone (4).

14. A communication method according to Claim 13, further comprising,
when the host-phone (2) is in a wait state, the wireless handset (1) being arranged to page the host-phone (2).

15. A communication method according to Claim 14, wherein the step of the wireless handset (1) paging the host-phone (2) is executed periodically.

16. A communication method according to Claim 14 or 15, further comprising, if there is no acknowledgement when the wireless handset (1) pages the host-phone (2), the handset alarming to warn the subscriber that the host-phone (2) may be lost or stolen.

17. A communication method according to any one of claims 13 to 16, further comprising a sending method and a receiving method, wherein:
the sending method including: an audio signal coming from a microphone of a handset, after having been processed by a main controller of the handset, being sent to a low-power wireless transceiver module for transmitting; the transmitted signal being received by a low-power wireless transceiver module in a host-phone, and being transferred to a wireless modem module through a digital audio interface; after having been processed and modulated in the wireless modem module, the signal being emitted in air;
the receiving method including: a signal coming from air, being demodulated by the wireless modem module in the host-phone and being recovered to an audio signal, which then being transferred to the low-power wireless transceiver through the digital audio interface; the recovered audio signal being modulated by the low-power wireless transceiver and being transmitted to the handset in a short distance; in the handset, the modulated audio signal being received and demodulated to an audio signal by the low-power wireless transceiver module; the audio signal being sent to the speaker in the handset to output, under control of the main controller of the handset;
further including: a control command, sent out by a keyboard in the handset, being first modulated by the low-power wireless transceiver module, and then transmitted to the low-power wireless transceiver module in the host-phone; in the host-phone, the control command being solved by a control signal interface and the main controller, then being modulated and emitted to air by the wireless modem module;
a control command coming from air, being received and demodulated by the wireless modem module in the host-phone; after having been passed through the main controller and the control signal interface, the control command being modulated and transmitted to the handset by the low-power wireless transceiver module in the host-phone; in the handset, the control command being received by the low-power wireless transceiver module, and shown on a display after having been processed by the main controller.

## Patentansprüche

1. Mobiltelefon, das ein Host-Telefon (2) mit PDA-Funktion und einen drahtlosen Handapparat (1) aufweist, der sich betriebsmäßig vom Host-Telefon (2) räumlich trennen kann, wobei der drahtlose Handapparat (1) dafür eingerichtet ist, über das Host-Telefon (2) auf ein mobiles Kommunikationssystem zuzugreifen, **dadurch gekennzeichnet, daß** das Host-Telefon (2) oder der drahtlose Handapparat (1) dafür konfiguriert ist, über ein Host-Telefon eines schnurlosen Telefons (4) auf ein öffentliches Telefonwählnetz zuzugreifen.

2. Mobiltelefon nach Anspruch 1, wobei:
das Host-Telefon (2) ein drahtloses Modemmodul (21), einen Hauptcontroller (22), eine Steuersignalschnittstelle (23), eine digitale Audioschnittstelle (24), ein drahtloses Sender/Empfänger-Modul kleiner Leistung (25) und eine PDA-Vorrichtung (26) aufweist; das drahtlose Modemmodul (21), die Steuersignalschnittstelle (23) und die PDA-Vorrichtung (26) jeweils mit dem Hauptcontroller (22) verbunden sind; die digitale Audioschnittstelle (24) mit dem drahtlosen Modemmodul (21) verbunden ist; die digitale Audioschnittstelle (24) und die Steuersignalschnittstelle (23) jeweils mit dem drahtlosen Sender/Empfänger-Modul kleiner Leistung verbunden sind;
der drahtlose Handapparat (1) einen Hauptcontroller (11), eine Anzeige (12), ein Mikrofon (13), einen Lautsprecher (14), eine Tastatur (15) und ein drahtloses Sender/Empfänger-Modul kleiner Leistung (16) aufweist; die Anzeige (12), das Mikrofon (13), der Lautsprecher (14) und das drahtlose Sender/Empfänger-Modul kleiner Leistung (16) jeweils mit dem Hauptcontroller (11) verbunden sind; die Tastatur (15) mit dem drahtlosen Sender/Empfänger-Modul kleiner Leistung (16) verbunden ist;
das drahtlose Sender/Empfänger-Modul kleiner Leistung (16) im Handapparat (1) dem drahtlosen Sender/Empfänger-Modul kleiner Leistung (25) im Host-Telefon (2) entspricht.

3. Mobiltelefon nach Anspruch 2, wobei das drahtlose Sender/Empfänger-Modul kleiner Leistung (25) im Host-Telefon (2) und das drahtlose Sender/Empfänger-Modul kleiner Leistung (16) im drahtlosen Handapparat (1) ein Bluetoothprotokoll-Modul ist.

4. Mobiltelefon nach Anspruch 2, wobei das drahtlose Sender/Empfänger-Modul kleiner Leistung (25) im Host-Telefon (2) und das drahtlose Sender/Empfänger-Modul kleiner Leistung (16) im drahtlosen Handapparat (1) ein Heimfunkfrequenzprotokoll-Modul ist.

5. Mobiltelefon nach Anspruch 2, wobei das drahtlose Sender/Empfänger-Modul kleiner Leistung (25) des Host-Telefons (2) sich außerhalb des Host-Telefons (2) befindet.

6. Mobiltelefon nach Anspruch 2, wobei das drahtlose Sender/Empfänger-Modul kleiner Leistung (25) des Host-Telefons (2) sich innerhalb des Host-Telefons (2) befindet.

7. Mobiltelefon nach Anspruch 2, wobei eine Arbeitsfrequenz zwischen dem Host-Telefon (2) und dem drahtlosen Handapparat (1) des Mobiltelefons 2,4 GHz beträgt.

8. Mobiltelefon nach Anspruch 2, wobei die Steuersignalschnittstelle (23) im Host-Telefon (2) eine RS232-Schnittstelle ist.

9. Mobiltelefon nach Anspruch 2, wobei die Steuersignalschnittstelle (23) im Host-Telefon (2) eine USB-Schnittstelle ist.

10. Mobiltelefon nach Anspruch 1, wobei der drahtlose Handapparat (1) dafür eingerichtet ist, das Host-Telefon (2) per Funkruf zu rufen, wenn das Host-Telefon (2) in einem Wartezustand ist.

11. Mobiltelefon nach Anspruch 1, wobei der drahtlose Handapparat (1) dafür eingerichtet ist, das Host-Telefon (2) per Funkruf periodisch zu rufen.

12. Mobiltelefon nach Anspruch 10 oder 11, wobei der drahtlose Handapparat (1) dafür eingerichtet ist, einen Alarm auszuführen, um einen Teilnehmer darauf hinzuweisen, daß das Host-Telefon (2) verlorengegangen oder gestohlen sein kann, falls keine Bestätigung erfolgt, wenn der drahtlose Handapparat (1) dafür eingerichtet ist, das Host-Telefon (2) per Funkruf zu rufen.

13. Kommunikationsverfahren eines Mobiltelefons, das ein Host-Telefon (2) mit PDA-Funktion und einen drahtlosen Handapparat (1) aufweist, der sich betriebsfähig vom Host-Telefon (2) räumlich trennen kann, wobei der drahtlose Handapparat (1) dafür eingerichtet ist, sich über das Host-Telefon (2) mit einem Mobilkommunikationssystem zu verbinden, **dadurch gekennzeichnet, daß** das Host-Telefon (2) oder der drahtlose Handapparat (1) dafür eingerichtet ist, über ein Host-Telefon eines schnurlosen Telefons (4) auf ein öffentliches Telefonwählnetz zuzugreifen.

14. Kommunikationsverfahren nach Anspruch 13, ferner folgendes umfassend: Wenn das Host-Telefon (2) in einem Wartezustand ist, ist der drahtlose Handapparat (1) dafür eingerichtet, das Host-Telefon (2) per Funkruf zu rufen.

15. Kommunikationsverfahren nach Anspruch 14, wobei der Schritt des Rufens des Host-Telefons (2) per Funkruf durch den drahtlosen Handapparat (1) periodisch ausgeführt wird.

16. Kommunikationsverfahren nach Anspruch 14 oder 15, ferner folgendes umfassend: Falls keine Bestätigung erfolgt, wenn der drahtlose Handapparat (1) das Host-Telefon (2) per Funkruf ruft, gibt der Handapparat Meldung, um den Teilnehmer darauf aufmerksam zu machen, daß das Host-Telefon (2) verlorengegangen oder gestohlen sein kann.

17. Kommunikationsverfahren nach einem der Ansprüche 13 bis 16, ferner umfassend ein Sendeverfahren und ein Empfangsverfahren, wobei:
das Sendeverfahren aufweist: Senden eines von einem Mikrofon eines Handapparats kommenden Audiosignals, nachdem es durch einen Hauptcontroller des Handapparats verarbeitet worden ist, an ein drahtloses Sender/Empfänger-Modul kleiner Leistung zur Übertragung; Empfangen des übertragenen Signals durch ein drahtloses Sender/Empfänger-Modul kleiner Leistung in einem Host-Telefon und Übergeben desselben über eine digitale Audioschnittstelle an ein drahtloses Modemmodul; nachdem es im drahtlosen Modemmodul verarbeitet und moduliert worden ist, Ausstrahlen des Signals in die Luft;
das Empfangsverfahren aufweist: Demodulieren eines aus der Luft kommenden Signals durch das drahtlose Modemmodul im Host-Telefon und Wiederherstellen desselben als ein Audiosignal, das dann über die digitale Audioschnittstelle an den drahtlosen Sender/Empfänger kleiner Leistung übergeben wird; Modulieren des wiederhergestellten Audiosignals durch den drahtlosen Sender/Empfänger kleiner Leistung und Übertragen desselben an den Handapparat in einer kurzen Entfernung; im Handapparat erfolgendes Empfangen und Demodulieren des modulierten Audiosignals zu einem Audiosignal durch das drahtlose Sender/Empfänger-Modul kleiner Leistung; Senden des Audiosignals an den Lautsprecher im Handapparat zum Ausgeben, unter Steuerung des Hauptcontrollers des Handapparats;
ferner folgendes aufweisend: zuerst Modulieren eines durch eine Tastatur im Handapparat ausgesendeten Steuerbefehls und dann Übertragen desselben an das drahtlose Sender/Empfänger-Modul kleiner Leistung im Host-Telefon; im Host-Telefon erfolgendes Auflösen des Steuerbefehls durch eine Steuersignalschnittstelle und den Hauptcontroller, dann Modulieren und Ausstrahlen desselben durch das drahtlose Modemmodul in die Luft;
Empfangen und Demodulieren eines aus der Luft kommenden Steuerbefehls durch das drahtlose Modemmodul im Host-Telefon; nachdem er über einen Hauptcontroller und die Steuersignalschnittstelle weitergegeben worden ist, Modulieren und Übertragen des Steuerbefehls an den Handapparat durch das drahtlose Sender/Empfänger-Modul kleiner Leistung im Host-Telefon; im Handapparat erfolgendes Empfangen des Steuerbefehls vom drahtlosen Sender/Empfänger-Modul kleiner Leistung und Zeigen desselben auf einer Anzeige, nachdem er durch den Hauptcontroller verarbeitet worden ist.

## Revendications

1. Téléphone mobile comportant un téléphone hôte (2) avec une fonction d'assistant numérique personnel (PDA) et un combiné sans fil (1), qui est utilisable pour être séparé du téléphone hôte (2) dans l'espace, dans lequel le combiné sans fil (1) est agencé pour accéder à un système de communication mobile via le téléphone hôte (2), **caractérisé en ce que** le téléphone hôte (2) ou le combiné sans fil (1) est configuré pour accéder à un réseau téléphonique public commuté via un téléphone hôte d'un téléphone sans fil (4).

2. Téléphone mobile selon la revendication 1, dans lequel :
le téléphone hôte (2) comporte une module de modem sans fil (21), un contrôleur principal (22), une interface de signal de commande (23), une interface audio numérique (24), un module d'émetteur - récepteur sans fil basse puissance (25) et un dispositif d'assistant numérique personnel (PDA) (26); le module de modem sans fil (21), l'interface de signal de commande (23) et le dispositif d'assistant numérique personnel (PDA) (26) sont connectés au contrôleur principal (22), respectivement ; l'interface audio numérique (24) est connectée au module de modem sans fil (21) ; l'interface audio numérique (24) et l'interface de signal de commande (23) sont connectées au module d'émetteur - récepteur sans fil basse puissance, respectivement ;
le combiné sans fil (1) comporte un contrôleur principal (11), un écran d'affichage (12), un microphone (13), un haut-parleur (14), un clavier (15) et un module d'émetteur - récepteur sans fil basse puissance (16) ; l'écran d'affichage (12 ), le microphone (13), le haut-parleur (14) et le module d'émetteur - récepteur sans fil basse puissance (16) sont connectés au contrôleur principal (11), respectivement; le clavier (15) est connecté au module d'émetteur - récepteur sans fil basse puissance (16) ;
le module d'émetteur - récepteur sans fil basse puissance (16) dans le combiné (1) correspond au module d'émetteur - récepteur sans fil basse puissance (25) dans le téléphone hôte (2).

3. Téléphone mobile selon la revendication 2, dans lequel le module d'émetteur - récepteur sans fil basse puissance (25) dans le téléphone hôte (2) et le module d'émetteur - récepteur sans fil basse puissance (16) dans le combiné sans fil (1) sont un module de protocole Bluetooth.

4. Téléphone mobile selon la revendication 2, dans lequel le module d'émetteur - récepteur sans fil basse puissance (25) dans le téléphone hôte (2) et le module d'émetteur - récepteur sans fil basse puissance (16) dans le combiné sans fil (1) sont un module de protocole de fréquence radio domestique.

5. Téléphone mobile selon la revendication 2, dans lequel module d'émetteur - récepteur sans fil basse puissance (25) du téléphone hôte (2) est en dehors du téléphone hôte (2).

6. Téléphone mobile selon la revendication 2, dans lequel le module d'émetteur - récepteur sans fil basse puissance (25) du téléphone hôte (2) est à l'intérieur du téléphone hôte (2).

7. Téléphone mobile selon la revendication 2, dans lequel la fréquence de fonctionnement entre le téléphone hôte (2) et le combiné sans fil (1) du téléphone mobile est de 2,4 GHz.

8. Téléphone mobile selon la revendication 2, dans lequel l'interface de signal de commande (23) dans le téléphone hôte (2) est une interface RS232.

9. Téléphone mobile selon la revendication 2, dans lequel l'interface de signal de commande (23) dans le téléphone hôte (2) est une interface USB.

10. Téléphone mobile selon la revendication 1, dans lequel le combiné sans fil (1) est adapté pour appeler par radiomessagerie le téléphone hôte (2) lorsque le téléphone hôte (2) est dans un état d'attente.

11. Téléphone mobile selon la revendication 1, dans lequel le combiné sans fil (1) est adapté pour appeler par radiomessagerie le téléphone hôte (2) de façon périodique.

12. Téléphone mobile selon la revendication 10 ou 11, dans lequel le combiné sans fil (1) est agencé pour déclencher une alarme pour avertir un abonné que le téléphone hôte (2) peut être perdu ou volé s'il n'y a pas d'accusé de réception lorsque le combiné sans fil (1) est adapté pour avertir par radiomessagerie le téléphone hôte (2).

13. Procédé de communication d'un téléphone mobile comportant un téléphone hôte (2) avec une fonction d'assistant numérique personnel (PDA) et un combiné sans fil (1) qui est utilisable pour être séparé du téléphone hôte (2) dans l'espace, dans lequel le combiné sans fil (1) est agencé pour se connecter à un système de communication mobile via le téléphone hôte (2), **caractérisé en ce que** le téléphone hôte (2) ou le combiné sans fil (1) est agencé pour accéder à un réseau téléphonique public commuté via un téléphone hôte d'un téléphone sans fil (4).

14. Procédé de communication selon la revendication 13, dans lequel, en outre, lorsque le téléphone hôte (2) est dans un état d'attente, le combiné sans fil (1) est agencé pour avertir par radiomessagerie le téléphone hôte (2).

15. Procédé de communication selon la revendication 14, dans lequel l'étape où le combiné sans fil (1) avertit par radiomessagerie le téléphone hôte (2) est exécutée périodiquement.

16. Procédé de communication selon la revendication 14 ou 15, comportant en outre l'étape dans laquelle, s'il n'y a pas d'accusé de réception lorsque le combiné sans fil (1) avertit par radiomessagerie le téléphone hôte (2), le combiné déclenche une alarme pour avertir l'abonné que le téléphone hôte (2) peut être perdu ou volé.

17. Procédé de communication selon l'une quelconque des revendications 13 à 16, comportant en outre un procédé de transmission et un procédé de réception, dans lequel :
le procédé de transmission comporte l'étape dans laquelle : un signal audio provenant d'un microphone d'un combiné, après avoir été traité par un contrôleur principal du combiné, est transmis à un module d'émetteur - récepteur sans fil basse puissance pour une transmission ; le signal transmis étant reçu par un module d'émetteur - récepteur sans fil basse puissance dans un téléphone hôte, et étant transféré à un module de modem sans fil via une interface audio numérique ; après avoir été traité et modulé dans le module de modem sans fil, le signal étant émis par radiocommunication ;
le procédé de réception comportant l'étape dans laquelle : un signal provenant d'un radiocommunication, est démodulé par le module de modem sans fil dans le téléphone hôte et récupéré sous la forme d'un signal audio, qui est ensuite transféré à l'émetteur - récepteur sans fil basse puissance par l'intermédiaire de l'interface audio numérique ; le signal audio récupéré étant modulé par l'émetteur - récepteur sans fil basse puissance et étant transmis au combiné à une courte distance ; dans le combiné, le signal audio modulé étant reçu et démodulé en un signal audio par le module d'émetteur - récepteur sans fil basse puissance ; le signal audio étant transmis au haut-parleur dans le combiné pour une génération en sortie, sous la commande du contrôleur principal du combiné ;
le procédé comportant en outre : une commande de contrôle, transmise par un clavier dans le combiné, étant, dans un premier temps, modulée par le module d'émetteur - récepteur sans fil basse puissance, et ensuite transmise au module d'émetteur - récepteur sans fil basse puissance dans le téléphone hôte ; dans le téléphone hôte, la commande de contrôle étant résolue par une interface de signal de commande et par le contrôleur principal, et étant ensuite modulée et émise par radiocommunication par le module de modem sans fil ;
une commande de contrôle provenant d'une radiocommunication, et étant reçue et démodulée par le module de modem sans fil dans le téléphone hôte, après avoir été transmise par l'intermédiaire du contrôleur principal et l'interface de signal de commande, la commande de contrôle étant modulée et transmise au combiné par le module d'émetteur - récepteur sans fil basse puissance dans le téléphone hôte ; dans le combiné, la commande de contrôle étant reçue par le module d'émetteur - récepteur sans fil basse puissance, et affichée sur un écran d'affichage après avoir été traitée par le contrôleur principal.
